# EUROPEAN PATENT APPLICATION

(11) **EP 3 487 021 A1**
(43) Date of publication of application: **22.05.2019**
(21) Application number: 17202586.8
(22) Date of filing: 20.11.2017
(51) Int. Cl.: H02H 1/06, H02H 3/24, H02J 9/06

(54) **METHOD AND CIRCUIT FOR POWER BREAK PROTECTION**

(71) Applicant: Vestel Elektronik Sanayi ve Ticaret A.S., 45030 Manisa (TR)
(72) Inventor: SARIARSLAN,, Muhammet Kürsat, 45030 Manisa (TR)
(74) Representative: Flint, Adam

(57) **Abstract**

A power break protection circuit (101) for protecting a device (103) from a power interruption. An electronic switch (201) is configured to trigger a power down or reset in the device after a source power supply (105) interruption. A reset circuit (202) has a first charge storage device (203) that is configured to turn on the electronic switch (201) after the source power supply (105) interruption and to power the device (103) during said power down or reset of the device (103). The reset circuit (202) also has at least one further charge storage device configured to selectively connect or disconnect from the reset circuit (202) based on at least the current drawn by the device (103), such that the total stored charge in the reset circuit (202) can provide enough power to the device (103) during power down or reset and such that the charge storage devices have discharged so that the electronic switch (201) turns off before the source power supply (105) returns.

## Description

### Technical Field

The present disclosure relates to a method and a circuit for power break protection.

### Background

Electrical and electronic devices require power to function. These devices may source their power from a mains electricity source or a battery. Electrical and electronic devices may be subject to a power supply interruption. This power supply interruption may be a drop in the voltage or a complete loss of power. This interruption could be due to many causes such as, for example, the unplugging of an AC power supply, AC supply dropouts, lightning strikes, etc.

Electronic devices may be subject to damage or loss of data due to power supply interruptions, when the devices switch off in an unsafe manner. A sudden power down could be particularly problematic if, for example, an important operation in the device was ongoing, such as a data storage operation or some processing of data or commands or the like.

It has been suggested to implement additional circuitry in electronic devices to monitor for interruptions in power supplies. In the case of an interruption, it has been suggested that the electronic devices can be powered through an alternative supply such as an Uninterruptable Power Supply (UPS). However, a UPS may not always be suitable as they can be bulky and expensive. Alternatively, if no other power supplies are present, then circuitry can be implemented in the electronic device so that it can power down in a safe manner. However, there are known problems with the current solutions.

### Summary

According to a first aspect disclosed herein, there is provided a power break protection circuit for protecting a device from a power interruption, the circuit comprising:
an electronic switch configured to trigger a power down or reset in a said device after a source power supply interruption; and
a reset circuit comprising:
   a first charge storage device configured to turn on the electronic switch after the source power supply interruption and to power a said device during said power down or reset of a said device; and
   at least one further charge storage device configured to selectively connect or disconnect from the reset circuit based on at least the current drawn by a said device, such that the total stored charge in the reset circuit can provide enough power to a said device during power down or reset and such that the first charge storage device and the at least one further charge storage device have discharged so that the electronic switch turns off before the source power supply returns.

The first charge storage device may have a connection with a ground. The first charge storage device may have a connection with the electronic switch. The first charge storage device and the at least one further storage device may be arranged in parallel with one another.

A first conduction terminal of the electronic switch may be connected to a power board of the device that is being protected. The first conduction terminal may be for example a collector of a BJT transistor.

The power break protection circuit may in use be provided with a source voltage. The source voltage may power the reset circuit.

In an example, the circuit comprises a protection circuit connected to the electronic switch and configured to detect the source power supply interruption.

The protection circuit may be connected to a second conduction terminal of the electronic switch. The second conduction terminal may be for example an emitter of a BJT transistor.

The protection circuit may have a high voltage when there is no power supply interruption. The protection circuit may fall to a low voltage when a power supply interruption is detected.

In an example, the reset circuit comprises a first resistor and a second resistor in a potential divider arrangement configured to determine the voltage provided to the first charge storage device and at least one further charge storage device.

In an example, the first resistor and the second resistor may be connected between the source voltage and a ground terminal. A node between the first resistor and second resistor may be connected to the electronic switch.

In an example, the reset circuit comprises a further resistor configured to selectively connect or disconnect from the circuit based on at least the current drawn by a said device, such that the connection or disconnection of the further resistor determines, in combination with the potential divider arrangement, the voltage provided to the first charge storage device and at least one further charge storage device.

The further resistor may have a connection with the source voltage. The further resistor may have a connection with the electronic switch.

In an example, the reset circuit comprises a diode configured to provide a discharge path for the stored charge into a said device.

In an example, the reset circuit comprises data storage configured to store a list of voltage fading rates gathered from tests performed on a said device while the source power supply is present.

In an example, the at least one further charge storage device is configured to selectively connect or disconnect from the reset circuit based on a comparison between the list of voltage fading rates and the current drawn by a said device. Where a further resistor is provided as discussed above, the further resistor may be configured to selectively connect or disconnect from the reset circuit based on a comparison between the list of voltage fading rates and the current drawn by a said device.

In an example, the electronic switch is a transistor.

In an example, the transistor may be a BJT transistor. The transistor may be an NPN type transistor.

According to a second aspect disclosed herein, there is provided a method for protecting a device from a power interruption, the method comprising:
charging a first charge storage device with a source voltage;
selectively connecting or disconnecting at least one further charge storage device into a reset circuit based on at least the current drawn by the device, whereby connecting the at least one further charge storage device will cause it to be charged up by the source voltage; and
if there is a source power interruption:
switching on an electronic switch which triggers a power down or reset in the device;
discharging the reset circuit through the electronic switch and the device, to provide power for the device during said power down or reset of the device.

In an example, the method comprises performing tests on the device while the source voltage is present.

In an example, the tests may calculate a list of voltage fading rates based on the current drawn by the device.

In an example, the connecting or disconnecting of the at least one further charge storage device may be based on a comparison between the current being drawn by the device and the list of voltage fading rates.

### Brief Description of the Drawings

To assist understanding of the present disclosure and to show how embodiments may be put into effect, reference is made by way of example to the accompanying drawings in which:
Figures 1A and 1B both show schematically an example of a power break protection circuit according to embodiments of the present disclosure connected to an electronic device; and
Figure 2 shows schematically a detailed view of an example of a power break protection circuit according to an embodiment of the present disclosure.

### Detailed Description

Electrical and electronic devices require power to function. These devices may source their power from a mains electricity source or a battery. Electrical and electronic devices may be subject to a power supply interruption. This power supply interruption may be a drop in the voltage or a complete loss of power (i.e. the supply voltage drops to 0 volts). This interruption could be due to many causes such as, for example, the unplugging of an AC power supply, AC supply dropouts or lightning strikes.

Electronic devices may be subject to damage or loss of data due to power supply interruptions, when the devices switch off in an unsafe manner. A sudden power down could be particularly problematic if, for example, an important operation in the device was ongoing, such as a data storage operation or some processing of data or commands or the like.

In examples disclosed herein, there is provided a power break protection circuit for protecting a device from a power interruption. The circuit has an electronic switch configured to trigger a power down or reset in the device after a source power supply interruption. The power break protection circuit includes a reset circuit which has a first charge storage device configured to turn on the electronic switch after the source power supply interruption and to power the device during said power down or reset of the device. The reset circuit has at least one further charge storage device which can connect or disconnect from the reset circuit based on the current drawn by the device. The total stored charge in the reset circuit will be able to provide enough power to the device during the power down or reset of the device, but all of the connected stored charge devices will have discharged enough such that the electronic switch will have turned off before the source power supply returns.

Therefore, this allows the controlled voltages in the device to be monitored such that if a drop in one of these controlled voltages is detected then there can be an immediate reaction by the power break protection circuit. But if the power supply is interrupted only for a short amount of time such that charge stored in the device can maintain the controlled voltages for a short time then no device reset is initiated. For example, in current solutions only a small interruption, for example, two AC cycles, which may only last 40 milliseconds for a 50Hz supply, may trigger a system power down and reset. However, the power drawn by the device at the time of the interruption may be low and the bulk capacities of the device may be high enough to maintain power in the device. Therefore, in this particular case, it may be unnecessary to reset the device. In examples shown herein, there is a circuit that can adapt to the changing current usage of the device it is protecting is order to trigger resets only when they are necessary.

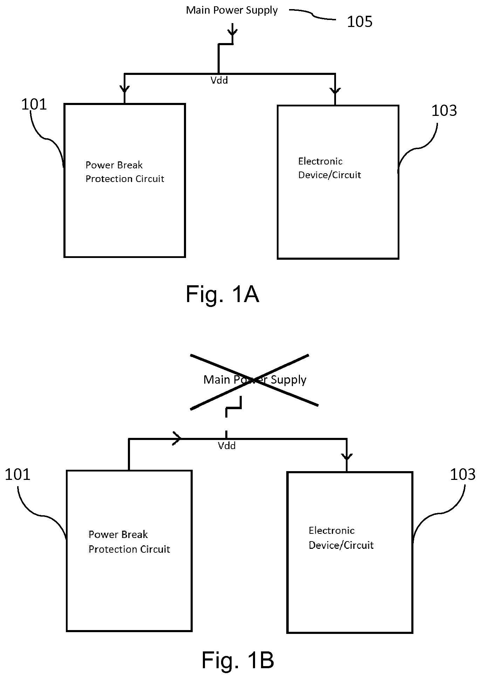

Referring now to the drawings, Figure 1A schematically shows an example of a power break protection circuit 101 according to an embodiment of the present disclosure connected to an electronic device/electronic circuit 103 (hereinafter simply "electronic device 103)". The electronic device 103, may be for example, a computer, data storage apparatus, such as for example a networked server, telecommunications equipment or some other electrical equipment. In such electronic devices 103, an unexpected power disruption could cause loss of data or some other interruption.

The electronic device 103 may receive power from a power supply 105 such as for example a mains AC voltage source. The power break protection circuit 101 in this example also receives power from the power supply 105. Figure 1A shows the direction of current flow with the use of arrows. Current flows from the power supply 105 to both the power break protection circuit 101 and the electronic device 103.

Figure 1B schematically shows an example of a situation where there is an interruption in the power supplied by the power supply 105. It can be seen from Figure 1B that current no longer flows from the power supply 105 to the power break protection circuit 101 or to the electronic device 103. Instead current flows from the power break protection circuit 101 to the electronic device 103. Therefore, the power break protection circuit 101 provides a temporary source of power to the electronic device 103 in the case of a mains power supply interruption. This may minimise the chance of a loss of data or damage to the electronic device 103 in the case of an interruption to the power supply 105. If the power supply 105 is suddenly cut off then the electronic device 103 may not be able to power down safely. However, the power break protection circuit 101 provides power to the electronic device 103 while there is no power being supplied by the power supply 105. Therefore, the electronic device 105 can either power down safely and/or use the power supplied by the power break protection circuit 101 to power its circuit until power from the power supply 105 returns. The power supply 105 may only be interrupted for a short amount of time.

In Figures 1A and 1B, the power break protection circuit 101 is shown as a separate circuit. In other examples, the power break protection circuit 101 can be integrated into the electronic device 103.

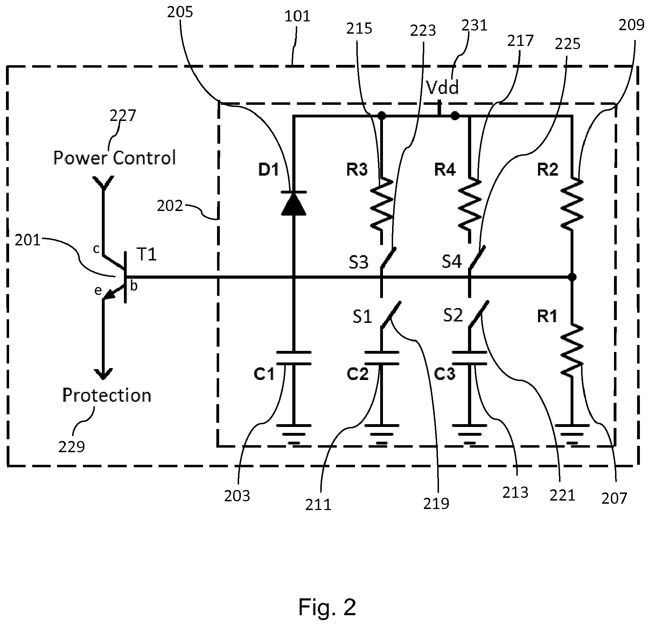

Figure 2 schematically shows a detailed view of an example of a power break protection circuit 101. The power break protection circuit 101 comprises a reset circuit 202.

The reset circuit 202 includes a main capacitor 203 and a diode 205 in series, which forms a discharge path. The main capacitor 203 is connected on one side to ground. The diode 205 is connected to a source voltage 231. The diode's 205 forward path is from the main capacitor 203 to the source voltage 231. The node between the other side of the main capacitor 203 and the diode 205 is connected to a base b (control terminal) of a transistor 201.

The reset circuit 202 further includes a first resistor 207 and second resistor 209 in series, which form a potential divider. The first resistor 207 is connected to ground. The second resistor 209 is connected to the source voltage 231. The node between the first resistor 207 and second resistor 209 is connected to the base b of the transistor 201. The source voltage 231 provides charge to the main capacitor 203. The first resistor 207 and second resistor 209 will determine the voltage provided to the main capacitor 203.

The main capacitor 203 and the diode 205 are connected in parallel with the potential divider formed by the first resistor 207 and second resistor 209.

The reset circuit 202 is arranged such that the total capacitance of the circuit can be varied. Charge stored in the reset circuit 202 may be used to power the device 103 if there is a power supply 105 interruption. Therefore, the reset circuit 202 comprises a main capacitor 203 and at least a second capacitor that is arranged such that it can be optionally connected into the reset circuit 202. In the example shown in Figure 2, there are two additional capacitors 211, 213 that can be optionally connected into the reset circuit 202. Furthermore, an additional two resistors 215, 217 are provided that can be optionally connected into the reset circuit 202. In other examples, further capacitors and/or resistors are included in the reset circuit 202.

A first switch 219 is situated between the source voltage 231 and the first capacitor 211. Closing the first switch 219 connects the first capacitor 211 into the reset circuit 202. Connecting the first capacitor 219 into the reset circuit 202 increases the total capacitance of the circuit.

A second switch 221 is situated between the source voltage 231 and the second capacitor 213. Closing the second switch 221 connects the second capacitor 213 into the reset circuit 202. Connecting the second capacitor 221 into the reset circuit 202 increases the total capacitance of the circuit.

A third switch 223 is situated between the source voltage 231 and a third resistor 215. Closing the first switch 223 connects the third resistor 215 into the reset circuit 202. A fourth switch 225 is situated between the source voltage 231 and a fourth resistor 217. Closing the first switch 223 connects the fourth resistor 217 into the reset circuit 202. Connecting the third resistor 215 into the reset circuit 202 and/or connecting the fourth resistor 217 into the reset circuit 202 determines (in combination with the second resistor 209 and any other of the resistors that are connected) the voltage provided to the capacitor(s) 203, 211, 213.

The first capacitor 211 and second capacitor 213 are arranged in parallel with the main capacitor 203 and first resistor 207. The first capacitor 211 and second capacitor 213 have a node at ground and at a connection with the base b of the transistor 201.

The third resistor 215 and fourth resistor 217 are arranged in parallel with the diode 205 and the second resistor 209. The third resistor 215 and fourth resistor 217 have a node at the source voltage 231 and at a connection with the base b of the transistor 201.

Each of the first switch 219, second switch 221, third switch 223 and fourth switch 225 can be opened or closed independently of one another.

The first capacitor 211, the second capacitor 213, the third resistor 215 and the fourth resistor 217 will be connected to the base of the transistor 201 dependent on whether the first switch 219, the second switch 221, the third switch 223 or the fourth 225 switch are closed respectively. Each of the switches 219, 221, 223, 225 may be for example an electronic switch.

Even though Figure 2 shows two additional resistors and two additional capacitors controlled by switches in the power break protection circuit 101, this is shown as an example only and any number of resistors or capacitors could be added or removed from the circuit. Furthermore, different components other than resistors and capacitors may be used instead/as well as in the reset circuit 202, such as for example, variable resistors and batteries.

As described previously, the power break protection circuit 101 comprises an electrical switch 201. In the example shown in Figure 2 the switch 201 is transistor 201. The transistor 201 may be for example a bipolar junction transistor (BJT). The transistor 201 may be an NPN type transistor or a PNP type transistor. In the example shown, the transistor 201 is an NPN type transistor.

The base b (control terminal) of the transistor 201 is connected to the reset circuit 202.

A collector c (first conduction terminal) of the transistor 201 is connected to a first port that is connected to a power board 227 of the device 103. The power board 227 may control the voltages/power in the device 103. When the power supply 105 is active the first port is "high" (that is, is at a high voltage, i.e. 5V).

An emitter e (second conduction terminal) of the transistor 201 is connected to a second port that is connected to a protection circuit 229. The protection circuit 229 is a circuit that monitors all of the controlled voltages in the device 103. In this example, the monitored voltages includes the source voltage 231 which is also applied to the reset circuit 202. The second port that is connected to the protection circuit 229 will be "high" (i.e. at a high voltage, such as 5V) if all of the monitored voltages are at the required level.

In operation, while the power break protection circuit 101 and the electronic device 103 are connected together with a properly functioning power supply 105, the system is said to be running. While the system is running, tests can be carried out on the system such as for example, load tests or drop tests. The device 103 that is being protected may run different tasks, operate different components, etc. at different times. Therefore, the current being drawn by the device 103 may vary over time. The tests can calculate how much stored energy is required after a power interruption for the device 103 to remain powered or to power down safely, based on the current drawn by the device. The tests carried out on the running system may output, for example, a list of voltage fading rates based on the current drawn by the device 103. The test results may form a database or list of voltage fading rates for the device 103. The database or list may be stored in a data storage (not shown in Figure 2). In other examples, the list of voltage fading rates may be predetermined and associated with the device 103.

As the power supply 105 is first initialised (to), or returned after a power interruption, said supply 105 will provide power to the source voltage 231. For example, the power from the power supply 105 may be rectified and/or voltage converted into the source voltage 231.

At to the source voltage 231 will start to charge up the main capacitor 203. Electrical charge will build up on the plates of the main capacitor 203. The filing rate of the main capacitor 203 is based on the value of the second resistor 209. The value of the first resistor 207 determines the voltage level of the main capacitor 203. This is due to the first resistor 207 and second resistor 209 forming a voltage divider.

At to the transistor 201 will be turned off. As the power supply 105 is active the first port will be high and the second port will also be high (i.e. both at 5 volts in this example). For this reason the transistor 201 does not operate even if the main capacitor 203 has reached a required level of voltage for the base voltage (V_{be}) to hit a threshold (i.e. >0.7v) because the collector c voltage and the emitter e voltage are both at the same potential.

While the system is running, the reset circuit 202 can connect or disconnect the first capacitor 211 and the second capacitor 213 using the first switch 219 and second switch 221 respectively. This can be done according to the current being drawn by the device 103 and the previously measured voltage fading rates. The first capacitor 211 and the second capacitor 213 may connect or disconnect automatically into the reset circuit 202 based on the current being drawn by the device 103 at any point in time. Connecting the first capacitor 211 and/or second capacitor 213 into the reset circuit 202 will increase the total charge the reset circuit 202 can hold.

Furthermore, the reset circuit 202 can also connect or disconnect the third resistor 215 and the fourth capacitor 217 using the third switch 223 and the fourth switch 225 respectively. Connecting or disconnecting the first resistor 215 and second resistor 217 will determine the voltage that the capacitor(s) will receive 203, 211, 213.

As an example, if the current drawn by the device 103 is high then a higher total capacitance may be activated in the reset circuit 202. If the total capacitance of the reset circuit 202 is higher, then it can output more power after a possible power interruption.

In this way, the reset circuit 202 can adaptively change the total amount of charge it can store in order to suit the changing power needs of the device 103.

As well as when the system is running, the system can also operate the appropriate switches 219, 221, 223, 225 connecting the respective components into the reset circuit 202 when the system experiences a power loss/at the point of a power interruption.

The power supply 105 may be interrupted at any point in time (tᵢ). As previously mentioned, the protection circuit 229 monitors all the controlled voltages in the device 103. If the protection circuit 229 senses one of these controlled voltages has dropped (for example, the source voltage 231), then the second port connected to the protection circuit 229 will fall low (i.e. 0V). In this way, the protection circuit 229 senses a voltage interruption instantaneously as all of the controlled voltages are monitored.

In another situation, the main power supply 105 is interrupted, but only for a short amount of time. In this situation, then capacitances/batteries in the system, for example in the power board 227, may be able to provide the power to keep the system voltages at the required level. In this situation, the device 103 should not be reset. As the protection circuit 229 monitors the controlled voltages in the device 103, and not the power supply 105, the second port may not always fall low if the power supply 105 is interrupted. In an example, an AC power supply may have a short, two cycle power interruption. There may be enough stored charge in capacitors of the device 103 to power said device 103 (enough power to keep the individual power rails of the device 103 at the required level). Thus, a reset in this situation would be unwanted. As the present disclosure shows a circuit whereby a reset would not be triggered in this situation, it is an advantage that may result in a reduction of unnecessary resets for the device 103.

When the power is interrupted (ti) and the protection circuit 229 senses a drop in one or more of the controlled voltages then the second port falls low (i.e. 0V). The transistor 201 will turn on. The main capacitor 203, and possibly the first capacitor 211 and second capacitor 213, will discharge through both the base of the transistor 201 (which turns the transistor 201 on) and the diode 205. As the transistor is now on, this will cause the first port connected to the power board 227 to go low (i.e. 0V). The first port will act as the source and the second port will act as the sink.

The first port is connected to the power board 227 and pulling the first port low will trigger the power board 227 to reset, thus allowing it to turn off in a controlled manner and damp system voltages correctly. The first port may have a direct connection to the power board 227. This may reduce the delay time compared to a system in which the first port is connected to, for example, a microprocessor before being connected to the power board 227. In the present disclosure, an advantage of having the first port having a direct connection to the power board 227 is that it may minimise the delay time of a reset.

The diode 205 allows the capacitor(s) 203, 211, 213 to discharge rapidly. The capacitor(s) 203, 211, 213 must discharge rapidly below the V_{be} threshold. This is to avoid the transistor being 'locked on' if the source voltage 231 was to return before the capacitor(s) 203, 211, 213 had discharged below V_{be}. If the transistor 201 is locked on then the reset signal to the power board 227 may also be 'locked on'. If the reset signal to the power board 227 is locked on then the power board 227 may not be able to function properly and in particular may be unable to reset or restart. Therefore, the capacitor(s) 203, 211, 213 that are connected in the reset circuit 202 must discharge enough so that the voltage (V_{be}) on the base b of the transistor 201 falls below the threshold (i.e. 0.7V), thus switching the transistor 201 off, before the source voltage 231 returns after an interruption.

As the capacitor(s) 203, 211, 213 also discharge through the diode 205 this will provide power to the device 103. The device 103 may require this additional power while there is a power interruption. The power provided by the capacitor(s) 203, 211, 213 to the device 103 will allow the device 103 to function while it is powering down safely. Without the power provided by the capacitor(s) the device 103 may not be able to perform a safe power shutdown.

Once the capacitor(s) 203, 211, 213 have discharged below the turn on threshold (i.e. 0.7V) of the transistor 201, the transistor 201 will turn off. At this point the controlled power down of the device 103 will have been completed. Subsequently, if power returns to the power supply 105 then the first port and second port will be pulled high again. The device 103 will then restart. The initialisation (to) will then cycle round again and the source voltage 231 will begin to charge up the capacitor(s) 203, 211, 213.

If the device 103 is drawing a high amount of current while the system is running then, in one example, the first 211 and second capacitors 213 are connected into the reset circuit in order to charge up. The stored list of voltage fading rates is used to make this determination in the reset circuit 202. By connecting these capacitors 211, 213, this will maximise the total charge stored in the reset circuit 202. If there is a power interruption at this point, then the charge stored in the reset circuit 202 will be able to power the device 103 while it powers down safely. But the capacitors 203, 211, 213 will also discharge quickly enough so that the system does not become locked if source power supply 105 returns.

If the main capacitor 203, first capacitor 211 and second capacitor 213 were all connected into the reset circuit when the device 103 was drawing a low amount of current then, at a power interruption, the capacitors 203, 211, 213 may take too long to discharge. If the capacitors 203, 211, 213 do not discharge before the power supply 105 returns then the transistor 201 may be locked on.

Therefore an advantage of the present disclosure is that the power break protection circuit 101 can adapt according to the current consumed by the device 103 so that the device 103 can power down safely while minimising the risk of the system locking.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A power break protection circuit for protecting a device from a power interruption, the circuit comprising:
an electronic switch configured to trigger a power down or reset in a said device after a source power supply interruption; and
a reset circuit comprising:
a first charge storage device configured to turn on the electronic switch after the source power supply interruption and to power a said device during said power down or reset of a said device; and
at least one further charge storage device configured to selectively connect or disconnect from the reset circuit based on at least the current drawn by a said device, such that the total stored charge in the reset circuit can provide enough power to a said device during power down or reset and such that the first charge storage device and the at least one further charge storage device have discharged so that the electronic switch turns off before the source power supply returns.

2. A circuit according to claim 1, comprising a protection circuit connected to the electronic switch and configured to detect the source power supply interruption.

3. A circuit according to any claim 1 or claim 2, wherein the reset circuit comprises a first resistor and a second resistor in a potential divider arrangement configured to determine the voltage provided to the first charge storage device and at least one further charge storage device.

4. A circuit according to claim 3, wherein the reset circuit comprises a further resistor configured to selectively connect or disconnect from the circuit based on at least the current drawn by a said device, such that the connection or disconnection of the further resistor determines, in combination with the potential divider arrangement, the voltage provided to the first charge storage device and at least one further charge storage device.

5. A circuit according to any of claims 1 to 4, wherein the reset circuit comprises a diode configured to provide a discharge path for the stored charge into a said device.

6. A circuit according to any of claims 1 to 5, wherein the reset circuit comprises data storage configured to store a list of voltage fading rates gathered from tests performed on a said device while the source power supply is present.

7. A circuit according to claim 6, wherein the at least one further charge storage device is configured to selectively connect or disconnect from the reset circuit based on a comparison between the list of voltage fading rates and the current drawn by a said device.

8. A circuit according to any of claims 1 to 7, wherein the electronic switch is a transistor.

9. A method for protecting a device from a power interruption, the method comprising:
charging a first charge storage device with a source voltage;
selectively connecting or disconnecting at least one further charge storage device into a reset circuit based on at least the current drawn by the device, whereby connecting the at least one further charge storage device will cause it to be charged up by the source voltage; and
if there is a source power interruption:
switching on an electronic switch which triggers a power down or reset in the device;
discharging the reset circuit through the electronic switch and the device, to provide power for the device during said power down or reset of the device.

10. A method according to claim 9, comprising performing tests on the device while the source voltage is present.

11. A method according to claim 10, wherein the tests calculate a list of voltage fading rates based on the current drawn by the device.

12. A method according to claim 11, wherein the connecting or disconnecting of at least one further charge storage device is based on a comparison between the current being drawn by the device and the list of voltage fading rates.
